# EUROPEAN PATENT APPLICATION

(11) **EP 1 565 015 A2**
(43) Date of publication of application: **17.08.2005**
(21) Application number: 05002429.8
(22) Date of filing: 04.02.2005
(51) Int. Cl.: H04Q 7/32

(54) **Method for controlling an operation mode of a mobile terminal in a broadband wireless access communication system**

(30) Priority: 11.02.2004 KR 2004008990
(71) Applicant: Samsung Electronics Co., Ltd., Suwon-si, Gyeonggi-do (KR)
(72) Inventor: Park, Jeong-Hoon c/o Samsung Electronics Co., Ltd., Suwon-si Gyeonggi-do (KR); Park, Yun-Sang c/o Samsung Electronics Co., Ltd., Suwon-si Gyeonggi-do (KR)
(74) Representative: Grünecker, Kinkeldey, Stockmair & Schwanhäusser Anwaltssozietät

(57) **Abstract**

A method for controlling an operation mode of a terminal in a broadband wireless access communication system. In the method, the operation modes of the terminal is subdivided, such that it is possible to effectively reduce power consumption of the terminal. In particular, the method allows the terminal to operate in the inactive mode in which the terminal having no traffic with a base station more than a predetermined time returns a CID of the terminal to the base station and keeps only a downlink with the base station, so that it is possible to prevent power of the terminal from being consumed during the sleep mode. Additionally, because a CID is not assigned to the terminal in the inactive mode, resources of the base station are efficiently used.

## Description

The present invention relates generally to a method and a corresponding apparatus for controlling an operation mode of a terminal in a broadband wireless access communication system, and more particularly to a method for controlling an operation mode of a terminal in a broadband wireless access communication system for reducing power consumption of the terminal.

Generally, a mobile communication network utilizes a sleep mode, which represents a waiting state of a terminal, and an active mode, which represents an operation state of the terminal.

In conventional cellular networks, such as CDMA (Code Division. Multiplex Access) and GSM (Global System for Mobile communication) networks, a sleep mode is realized through a slotted paging operation. That is, terminals operating in the conventional cellular networks may stay in a sleep mode having little power consumption if a terminal mode is not an active mode. In this state, a terminal often awakes to determine if a paging message has been transmitted to the terminal. When the paging message has been transmitted to the terminal, the terminal mode is changed from the sleep mode into the active mode. However, if the paging message is not transmitted to the terminal, the terminal returns to the sleep mode.

Because a paging slot is assigned between a base station and terminals, each terminal awakes at a predetermined paging slot assigned thereto in order to check the paging message transmitted thereto. That is, a terminal in a CDMA network has an assigned paging slot and a terminal in a GSM network has an assigned paging group, enabling the terminals of the CDMA and GSM networks to awake once in a predetermined period of time. Also, because the predetermined period of time is fixed by a system, the system can easily manage the operation of the terminals.

However, it is difficult to control the sleep mode in a broadband wireless access communication system (i.e., "4^{th} generation communication system"), which has been actively studied and developed in order to support a high-speed service, because a sleep interval exponentially increases in the sleep mode proposed by an IEEE 802.16e communication system, which is achieved by supplementing an IEEE 802.16a communication system with mobility of subscribers. That is, because the sleep interval exponentially increases in the IEEE 802.16e communication system, it is difficult for the IEEE 802.16e communication system to manage start times of sleep modes, sleep intervals, and awaking points of a plurality of subscriber terminals. Accordingly, it is difficult for the IEEE 802.16e to control the sleep mode.

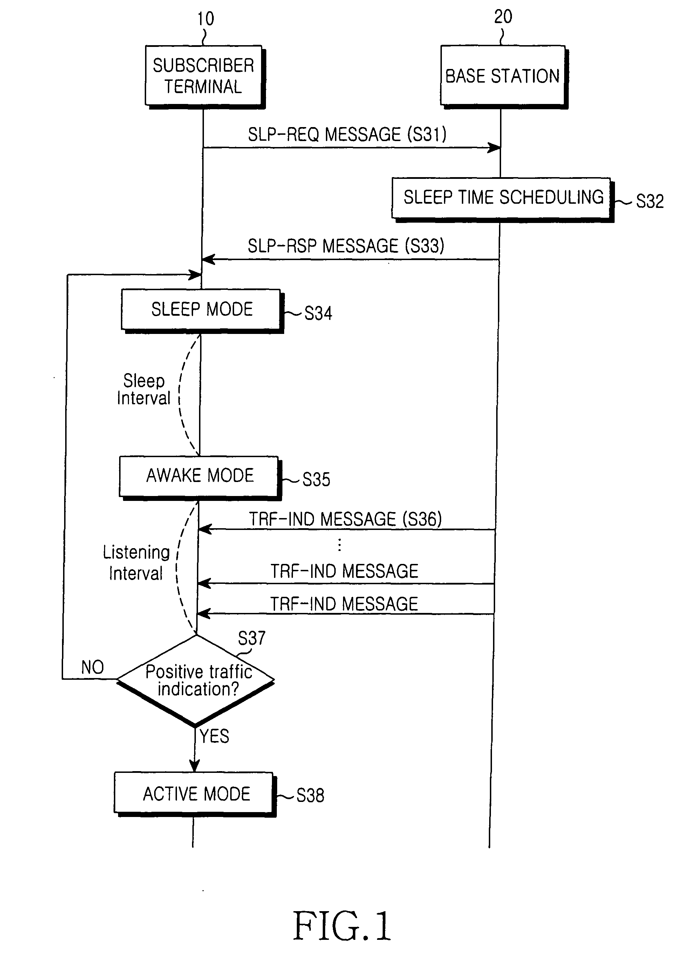

FIG. 1 illustrates a procedure for controlling a sleep mode proposed by an IEEE 802.16e communication system. Conventionally, a sleep mode of the IEEE 802.16e communication system is started according to either a request of a subscriber terminal or a control command of a base station. FIG. 1 illustrates a method of starting the sleep mode according to the request the subscriber terminal request.

Referring to FIG. 1, a subscriber terminal 10 transmits a sleep request message (SLP-REQ message) to a base station 20 in order to enter into the sleep mode in step S31. The subscriber terminal sends a required minimum size value (e.g., a min-window), a required maximum size value (e.g., a max-window), and a required value of a listening interval, which is a time slot at which a corresponding terminal awakes to check a page message to be transmitted thereto. The unit of each value is a frame.

The base station 20 receives the SLP-REQ message and performs a sleep time scheduling with reference to preset sleep control information (e.g., an admittable min-window, an admittable maximum size, and an admittable listening interval) in step S32. In addition, the base station 20 sends a sleep response message (SLP-RSP message) to the subscriber terminal 10 in step S33. The base station transmits the number of frames remaining until the subscriber terminal 10 enters into the sleep mode (which is referred to as a start-time), a minimum time slot value (min-window value), a maximum time slot value (max-window), and a listening interval value, which are approved by the base station. Therein, the unit of each value is also a frame.

The subscriber terminal 10 receives the SLP-RSP message and enters into the sleep mode at the start time included in the SLP-RSP message in step S34. The subscriber terminals 10 awake after the sleep interval lapses, and checks if there is PDU data to be transmitted from the base station 20. That is, the subscriber terminal 10 enters into the awake mode after the sleep interval lapses in step S35, and confirms a traffic indication message (TRF-IND message : TraFfic-INDmessage, called a paging message) broadcasted from the base station 20 during the listening interval in step S36. The TRF-IND message is information broadcasted to the subscriber terminal 10 by the base station 20 and includes basic connection identifiers (CIDs) of subscriber terminals that will receive PDU data.

The subscriber terminal 10 determines if its basic CID (BCID) is included in the TRF-IND message in order to determine if the subscriber terminal 10 must wake up. That is, if a BCID of the subscriber terminal 10 is included in the received TRF-IND message, the subscriber terminal 10 recognizes the existence of PDU data to be transmitted thereto, so the subscriber terminal 10 awakes. Therefore, in FIG. 1, if the TRF-IND message received by the subscriber terminal 10 is a positive traffic indication in step S37, the subscriber terminal 10 performs a state transition into the active mode in step S38.

However, if the BCID of the subscriber terminal 10 is not included in the received TRF-IND message, the subscriber terminal 10 determines that there is no PDU data to be transmitted thereto, and returns to the sleep mode. That is, if the TRF-IND message received by the subscriber terminal 10 is a negative traffic indication, the state of the subscriber terminal 10 is changed into the sleep mode in step S34, and the base station 20 waits for the subscriber terminal 10 to awake during the sleep interval.

The subscriber terminal 10 increases the sleep interval twice as long as the previous sleep interval, and maintains the sleep mode in step S34 during the increased sleep interval. The subscriber terminal 10 repeatedly performs the sleep mode and the awake mode until the state of the subscriber terminal 10 is changed into the active mode.

Whenever the subscriber terminal 10 repeatedly performs the sleep mode and the awake mode, the subscriber terminal 10 increases the sleep interval twice as long as the previous sleep interval in such a manner that the sleep interval reaches the maximum time slot allotted to the subscriber terminal 10 by the base station 20.

As described above, the IEEE 802.16e communication system executes a sleep mode while increasing the sleep interval twice as long as the previous sleep interval according to a sleep update algorithm. Accordingly, because the IEEE 802.16e communication system exponentially increases the sleep interval, it is difficult for the base station to integrally manage the sleep intervals of subscriber terminals.

Additionally, the IEEE 802.16e communication system has three messages defined between the subscriber terminal and the base station for enabling the subscriber terminal to enter into the sleep mode. That is, the three messages include a sleep request message (SLP-REQ message), a sleep response message (SLP-RSP message), and a traffic indication message (TRF-IND message).

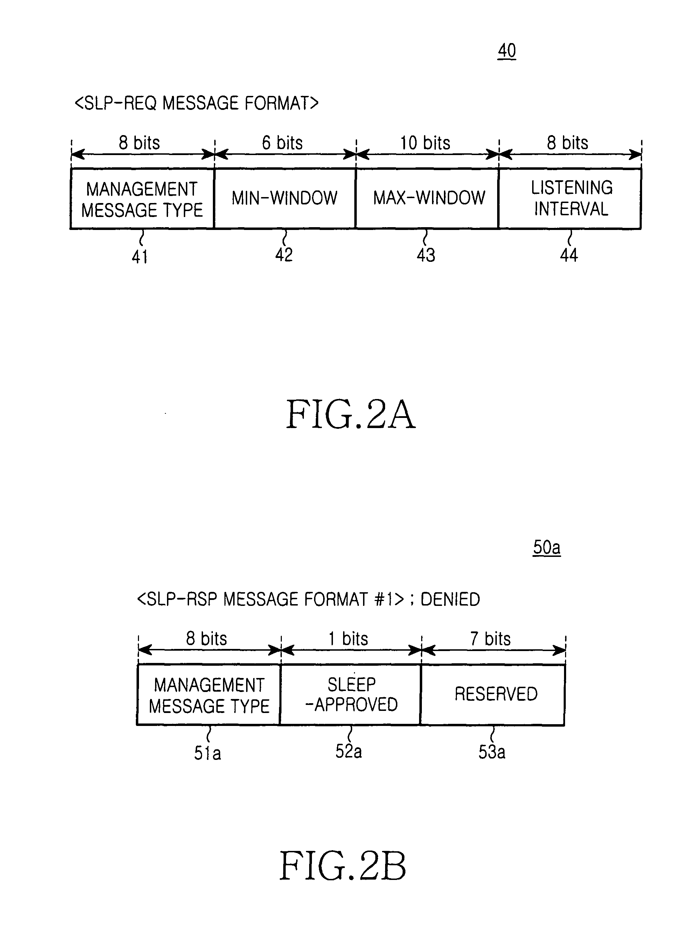

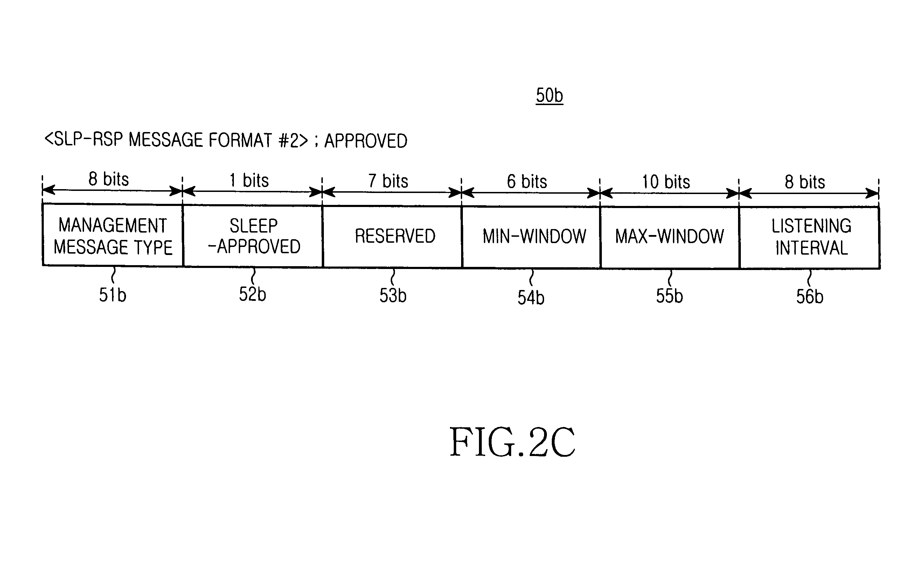

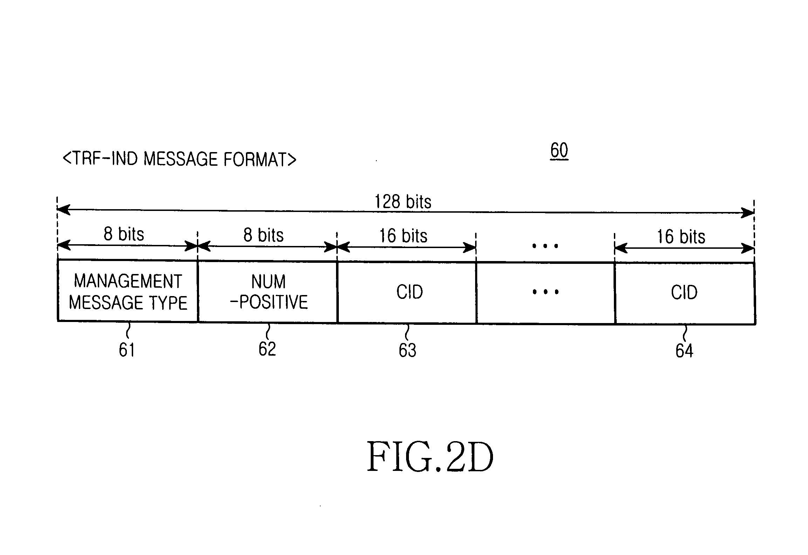

FIGs. 2A to 2D illustrate formats of messages communicated between the base station and the subscriber terminal in order to control the sleep mode as described above. More specifically, FIG. 2A illustrates a sleep request message 40, FIG. 2B illustrates a sleep response message 50a when rejecting sleep, and FIG. 2C illustrates a sleep response message 50b when approving sleep. Further, FIG. 2D illustrates a traffic indication message format 60.

Referring to FIG. 2A, the SLP-REQ message 40 includes a management message type (MANAGEMENT MESSAGE TYPE; 8 bits) 41, a minimum window (MIN-WINDOW; 6 bits) 42, a maximum window (MAX-WINDOW; 10 bits) 43, and a listening interval (LISTENING INTERVAL; 8 bits) 44. The SLP-REQ message 40 is a dedicated message that is transmitted on the basis of a connection identification CID of the subscriber terminal, and notifies that the subscriber terminal requests sleep.

The management message type (MANAGEMENT MESSAGE TYPE) 41 is information representing a type of a message currently transmitted. If the management message type is '45' (MANAGEMENT MESSAGE TYPE = 45), the currently transmitted message is the SLP-REQ message. The management message type 41 is realized with 8 bits.

The minimum window MIN-WINDOW (that is, a minimum time slot) 42 represents a requested start value for the sleep interval (measured in frames) and the maximum window MAX-WINDOW (that is, a maximum time slot) 43 represents a requested stop value for the sleep interval (measured in frames). That is, the sleep interval is updated while exponentially increasing from the minimum window value 42 to the maximum window value 43.

The listening interval LISTENING INTERVAL 44 represents a requested LISTENING INTERVAL (measured in frames).

The minimum window 42, the maximum window 43, and the listening interval 44 are established as a frame unit.

Referring to FIG. 2B, the SLP-RSP message 50a, which is used for rejecting a sleep request, includes a management message type (8 bits) 51a, a sleep approval SLEEP-APPROVED (1 bits) 52a, and a reserved field RESERVED (7Bits) 53a. The SLP-RSP message 50a is also a dedicated message that is transmitted on the basis of a connection identification CID of the subscriber terminal. The SLP-RSP message 50a determines a sleep timing of the subscriber terminal after the base station performs scheduling with respect to a sleep time of the subscriber terminal.

The management message type 51a represents a type of a currently transmitted message. If the management message type is '46' (MANAGEMENT MESSAGE TYPE = 46), the currently transmitted message is the SLP-RSP message.

The sleep approval (SLEEP-APPROVED) 52a is represented with one bit. The sleep approval 52a '0' indicates that it is impossible to change into the sleep mode (SLEEP-MODE REQUEST DENIED).

The reserved field (RESERVED) 53a is a field for preparation.

Referring to FIG. 2C, when the base station approves the sleep request, the SLP-RSP message 50b transmitted to the subscriber terminal includes a management message type (8 bits) 51 b, a sleep approval (SLEEP-APPROVED:1 bit) 52b, a start time (START-TIME:7 bits) 53b, a minimum window (MIN-WINDOW) 54b, a maximum window (MAX-WINDOW) 55b, and a listening interval (LISTENING INTERVAL) 56b. The management message type 51b represents a type of a currently transmitted message. If the management message type is '46' (MANAGEMENT MESSAGE TYPE = 46), the currently transmitted message is the sleep response message. The sleep approval (SLEEP-APPROVED) 52b is represented with one bit. The sleep approval 52b '1' (SLEEP-MODE REQUEST APPROVED) represents that it is possible to change into a sleep mode.

The start time START TIME 53b is a frame value before the subscriber terminal enters into the first sleep interval (the first SLEEP INTERVAL), in which a value of a frame receiving the sleep response message is not included in the frame values. That is, the subscriber terminal performs a state transition into the sleep mode after frames in a range of from a frame next to the frame receiving the sleep response message to a frame corresponding to the START TIME elapse.

The minimum window 54b represents a start value for the SLEEP INTERVAL (measured in frames), and the maximum window 55b represents a stop value for the SLEEP INTERVAL (measured in frames). The listening interval 56b is a value for LISTENING INTERVAL (measured in frames).

Referring to FIG. 2D, the TRF-IND message 60 includes a management message type (8 bits) 61, a number of positive subscribers NUM-POSITIVE (8 bits) 62, and connection identifications of the positive subscribers CIDs 63 and 64, each of which is represented by 16 bits. The TRF-IND message 60 is transmitted through a broadcasting method, which is different from the transmitting methods for the SLP-REQ message and the SLP-RSP message.

The management message type 61 represents a type of a message that is currently transmitted. The management message type 61 '47' (MANAGEMENT MESSAGE TYPE = 47) indicates that the currently transmitted message is the TRF-IND message. The number of the positive subscribers 62 represents the number of subscriber terminals to which packet data must be transmitted. The connection identifications CIDs 63 and 64 of the positive subscribers include connection identification information corresponding to the number of the positive subscribers.

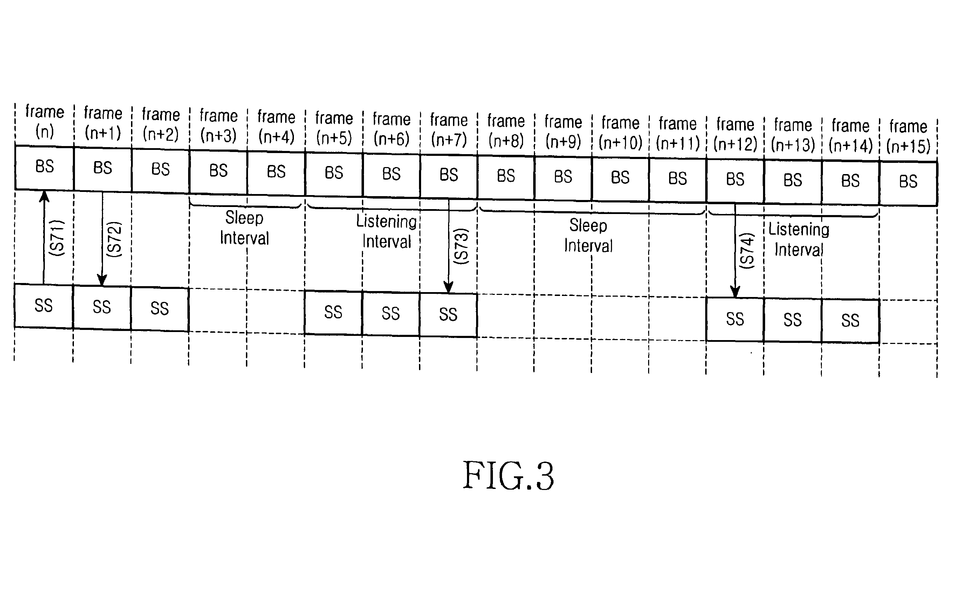

FIG. 3 illustrates a sleep interval update algorithm, which is proposed for the IEEE 802.16e communication system. In FIG. 3, 'SS' refers to a subscriber terminal and 'BS' refers to a base station. Also, boxes including 'SS' and 'BS' are frames.

Referring to FIG. 3, the subscriber terminal SS requests the sleep mode to the base station BS in an n^{th} frame in step S71 and the base station BS responds to the request for the sleep mode in n+1^{th} frame by specifying the start time of the sleep mode as n+3^{th} frame in step S72. The subscriber terminal SS repeats the sleep interval and the listening interval. As illustrated in FIG. 3, an initial sleep interval has two frames, and a second sleep interval has four frames, which is double to the number of frames of the initial sleep interval.

As described above, although the conventional IEEE 802.16e communication system reduces power consumption of a terminal utilizing the sleep mode, such a sleep mode also has a limitation for reducing power consumption of the terminal. More specifically, because the terminal must wake up by a predetermined period of time and check if a TRF-IND message has been to be transferred thereto, the terminal must consume power thereof in order to detect the TRF-IND message. Further, a base station has a problem in that the base station continuously assigns unnecessary resources such as a connection ID to a corresponding terminal, such that resources of the base station is not efficiently utilized.

Accordingly, the present invention has been designed to solve the above and other problems occurring in the prior art

It is the object of the present invention to provide a method for controlling an operation mode of a mobile terminal in a broadband wireless access communication system, which can effectively reduce power consumption of the mobile terminal by subdividing operation modes of the mobile terminal.

This object is solved by the subject matter of the independent claims.

Preferred embodiments are defined in the dependent claims.

In order to accomplish the above object, there is provided a method and a corresponding apparatus for controlling an operation mode of a subscriber terminal in a broadband wireless access communication system including a base station and subscriber terminals. The method includes: returning a connection identifier (CID) assigned by the base station from the subscriber terminal to the base station; and transitioning the subscriber terminal into an inactive state in which system information periodically occurring in the base station is checked at a predetermined paging period, if there is no traffic to transmit during a predetermined time in a state in which the subscriber terminal is connected to the base station.

Additionally, there is provided a method for controlling an operation mode of a subscriber terminal in a broadband wireless access communication system including a base station and subscriber terminals. The method includes the steps of: assigning the subscriber terminal with a unique connection identifier, which is used in an area controlled by the base station, and a unique temporary mobile identifier, which is used in a paging area including areas controlled by a plurality of base stations, as a response to a connection request from the subscriber terminal; transitioning the subscriber terminal into an active mode, such that the subscriber terminal makes data communication with the base station while maintaining transmission links with the base station; transitioning the subscriber terminal into a sleep mode while the subscriber terminal is maintaining transmission links by a request of the subscriber terminal; transitioning the subscriber terminal into an inactive state in which the subscriber terminal returns the connection identifier to the base station and maintains only a down link with the base station, if the subscriber terminal has no traffic with the base station for more than a predetermined time, after entering into the sleep mode; checking system information periodically occurring in the base station by a predetermined paging period using the temporary mobile identifier; receiving a paging advertisement message after a predetermined frame, if the subscriber terminal in the inactive state receives the system information including a paging indicator for reporting an existence of data to be transferred to the subscriber terminal; and transitioning the subscriber terminal into the active state, if the temporary mobile indicator of the subscriber terminal is included in the paging advertisement message.

The above object, features, and advantages of the present invention will be more apparent from the following detailed description taken in conjunction with the accompanying drawings, in which:
FIG. 1 illustrates a procedure for controlling a sleep mode proposed for an IEEE 802. 16e communication system;
FIGs. 2A to 2D illustrate message formats transmitted/received between a base station and a terminal in order to control a sleep mode in an IEEE 802. 16e communication system;
FIG. 3 illustrates a sleep interval update algorithm, which is proposed for the IEEE 802.16e communication system;
FIG. 4 illustrates an operation of a subscriber terminal in a broadband wireless access communication system according to an embodiment of the present invention;
FIG. 5 illustrates a paging area according to an embodiment of the present invention;
FIG. 6 illustrates a method for controlling an operation mode of a terminal in a broadband wireless access communication system according to an embodiment of the present invention;
FIGs. 7A to 7D illustrate message formats transmitted/received between a base station and a terminal in order to control an operation mode of the terminal in a broadband wireless access communication system according to an embodiment of the present invention; and
FIGs. 8 illustrates a procedure of awaking a terminal in an inactive mode through a method for controlling the terminal according to an embodiment of the present invention.

Preferred embodiments of the present invention will be described in detail herein below with reference to the accompanying drawings. In the drawings, the same or similar components are designated by the same reference numerals as far as possible, even if they are shown in different drawings. Additionally, in the following description of the present invention, a detailed description of known functions and configurations incorporated herein will be omitted when it may obscure the subject matter of the present invention.

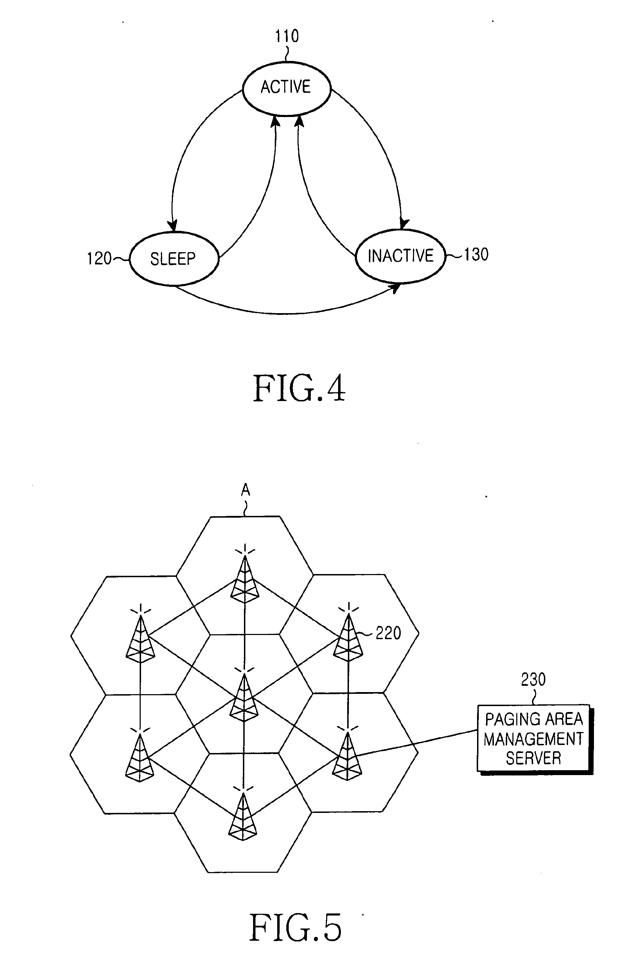

FIG. 4 illustrates an operation mode of a terminal in a broadband wireless access communication system according to an embodiment of the present invention. Referring to FIG. 4, the terminal of the broadband wireless access communication system operates in an active operation mode 110, a sleep operation mode 120, or an inactive operation mode 130. The active mode 110 refers to a state in which the terminal maintains a downlink and an uplink with a base station while keeping all connection IDs (ClDs) assigned from the base station, which are a basic CID, a primary CID, a secondary CID, and a traffic CID. The sleep mode 120 refers to a state in which communication between the terminal and the base station cannot be established temporarily, even though the terminal has the CIDs assigned from the base station. In the sleep mode 120, although the terminal does not make data communication with the base station, the terminal continuously inspects if there are messages corresponding thereto in the sleep mode 120, while maintaining downlink and uplink synchronization with respect to the base station.

The inactive mode 130 refers to a terminal state in which the terminal remains in the sleep mode 120 for more than a predetermined period of time. In the inactive mode 130, the terminal returns all CIDs assigned thereto to the base station and checks system information, occurring from the base station at the end of 5ms frames, with a predetermined period of time. Accordingly, the terminal maintains only the downlink synchronization with respect to the base station.

The terminal in the active mode 110 can change a mode thereof to the sleep mode 120 or inactive mode 130, depending on the states of data communication with the base station and the CIDs. Also, the terminal in the sleep mode 120 can change the mode thereof to the active mode 110 or the inactive mode 130, if the sleep mode 120 maintains for a predetermined period of time. The terminal in the inactive mode 130 maintains the inactive mode 130 until the terminal receives a paging signal transferred from the base station to the terminal. If the terminal receives the paging signal, the terminal can change the mode thereof to the active mode 110.

FIG. 5 illustrates a paging area according to an embodiment of the present invention. The paging area is a unit for performing "paging" with respect to a terminal in a network, and one paging area can be formed by binding a plurality of base stations.

FIG. 5 illustrates an example in which cells controlled by seven base stations are formed as one paging area "A" managed by a paging area management server 230. The paging areas are identified by paging area identifiers (PAIDs), and base stations included in the paging areas notify corresponding PAIDs to terminals positioned at corresponding areas through broadcasting.

The paging area management server 230 manages PAIDs according to paging areas and terminals in an inactive state, which are included in paging areas corresponding to the PAIDs. Because the terminals in the inactive state return CIDs received from base stations to the base stations, additional identifiers are required in order to identify each of the terminals in the paging areas. Herein, these identifiers are referred to as "temporary mobile identifier (TMI)" and are provided to terminals from base stations when the terminals are registered in the base stations. It is preferred that the base stations receive information related to TMIs from the paging area management server 230 in such a manner that the registered terminals have unique TMIs in paging areas, and assign TMIs to the registered terminals.

A TMI is changed only when a paging area of a terminal is changed, and the base station performs "paging" with respect to a terminal by using a TMI. Accordingly, although terminals in the inactive state move between base stations in the same paging area, the terminals do not perform handover operations. However, if the paging area is changed, the terminals perform a "paging area update", which is an operation for notifying a network of change of the paging area in which the terminals are positioned.

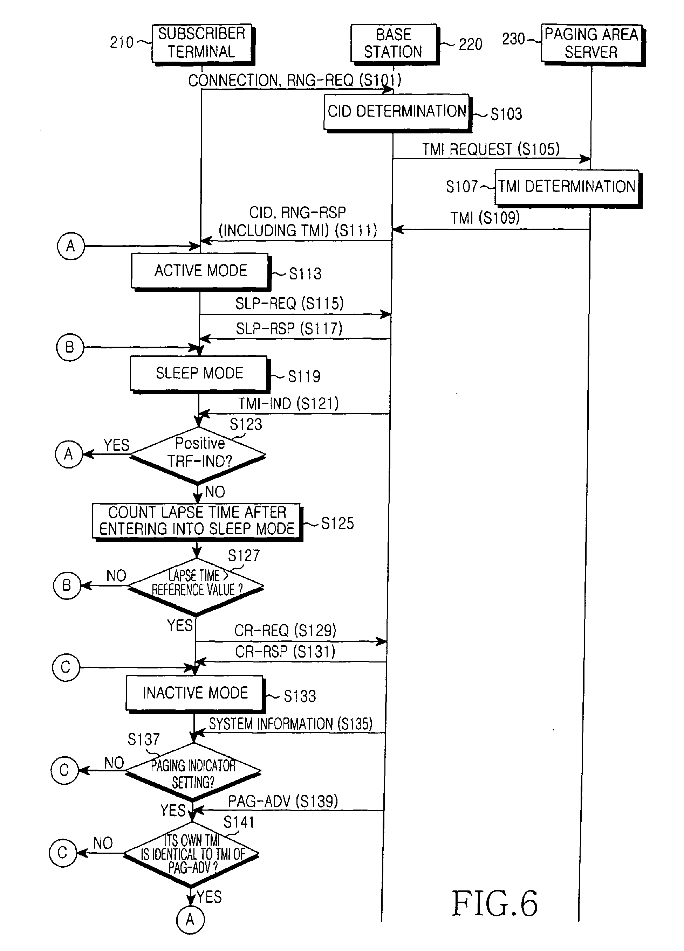

FIG. 6 is a flow chart illustrating a method for controlling an operation mode of a terminal in a broadband wireless access communication system according to an embodiment of the present invention.

Referring to FIG. 6, if a subscriber terminal 210 transfers a media access control (MAC) address thereof to a base station 220 through a range_request (RNG_REQ) message while requesting a connection to the base station 220 in step 101, the base station 220 determines a CID of the subscriber terminal 210 in step 103 and requests a TMI of the subscriber terminal 210 from a paging area management server 230 in step 105.

After determining a TMI of the subscriber terminal 210 in step 107, the paging area management server 230 transfers the TMI of the subscriber terminal 210 to the base station 220 in step 109.

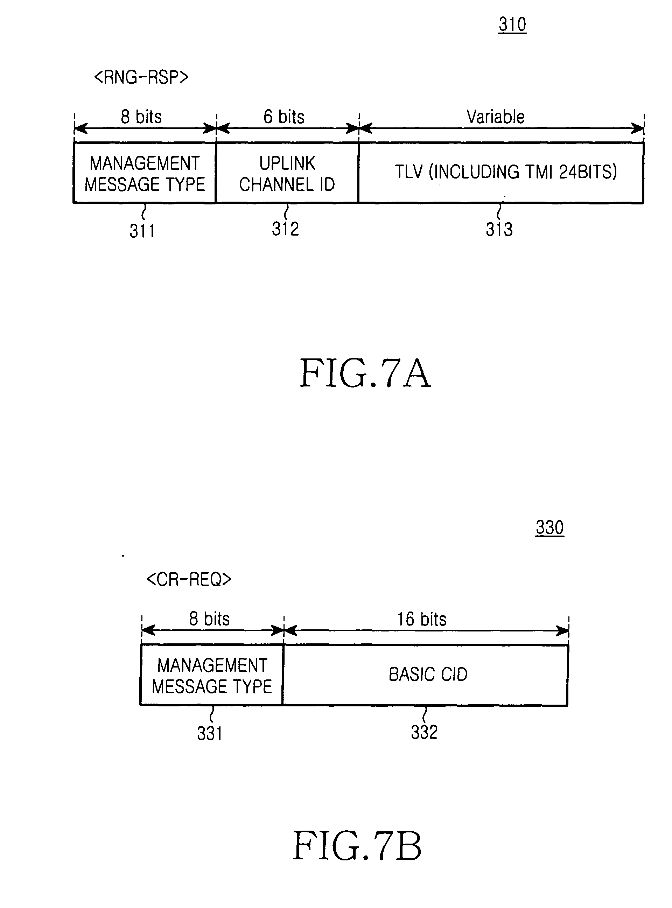

The base station 220 transfers the CID determined in step 103 and a range_response message (RNG_RSP), which is a response message for the RNG_REQ, to the subscriber terminal 210 in step 111. The base station 220 inserts the TMI received in step 109 into the RNG_RSP message in order to transfer the RNG_RSP message. An example of a data format for the RNG_RSP message is illustrated in FIG. 7A.

As described above, the subscriber terminal 210 having received the CID and the RNG_RSP message from the base station 220 operates in the active mode in step 113.

If the subscriber terminal 210 requests a state transition into the sleep mode (SLP_REQ) due to factors such as a user's request, or a predetermined sleep period while the subscriber terminal 210 is operating in the active mode in step 115, the base station 220 transfers a response to the SLP_REQ, i.e., an SLP_RSP, to the subscriber terminal 210 in step 117. The subscriber terminal 210 shares sleep information (e.g., a predetermined sleep period and a sleep interval) with the base station 220. That is, the subscriber terminal 210 shares the sleep information determined by the subscriber terminal 210 or the base station 220 with the base station 220 in steps 115 and 117.

The subscriber terminal 210 having received a response message (SLP_RSP) from the base station 220 in step 117 performs a state transition into the sleep mode in step 119. The subscriber terminal 210 wakes up every one predetermined period of time on the basis of the sleep information and determines if a TRF_IND delivered from the base station 220 is a positive TRF_IND in steps 121 and 123.

If the TRF_IND received in step 121 is the positive TRF_IND, the subscriber terminal 210 transitions into the active mode in step 113. However, if the TRF_IND is not the positive TRF_IND, the subscriber terminal 210 counts a lapse time after entering into the sleep mode again in step 125. Counting of the lapse time is performed in order to change a state of the subscriber terminal 210 to the inactive mode if the subscriber terminal 210 maintains the sleep mode above the predetermined time, that is, if there is no traffic between the subscriber terminal 210 and the base station 220 for the predetermined time.

Additionally, the subscriber terminal 210 compares the lapse time counted in step 125 with a predetermined basis value in step 127, and, if the counted result in step 125 is smaller than the predetermined basis value, the subscriber terminal 210 continuously maintains the sleep mode.

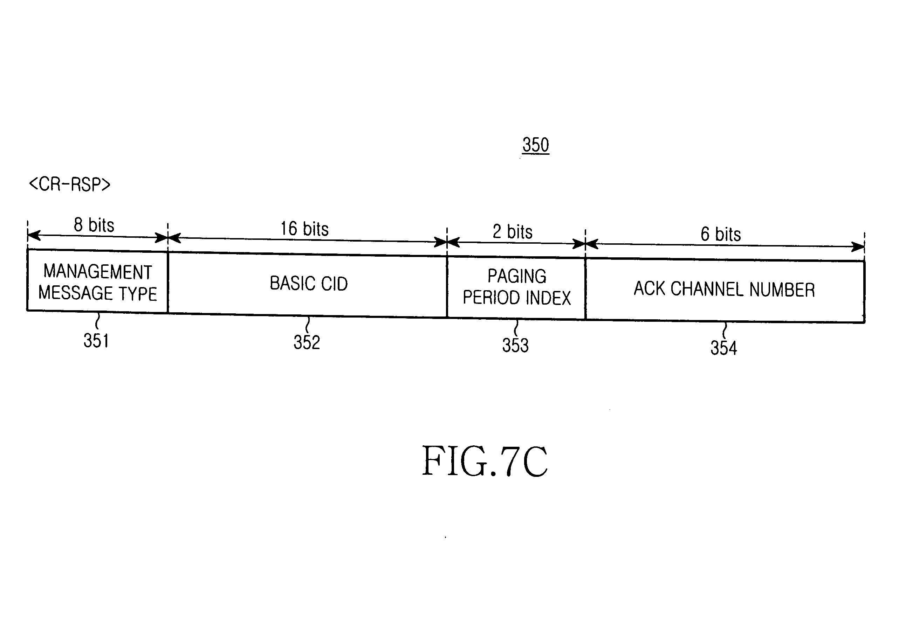

However, if the counted result in step 125 exceeds the predetermined basis value, the subscriber terminal 210 requests a connection release request (CR_REQ) message to the base station 220 in step 129. The subscriber terminal 210 receives a connection release response (CR_RSP) as a response to the CR_REQ message from the base station 220 in order to perform a state transition into the inactive mode in step 133. The CR_RSP message includes paging period information through which the subscriber terminal 210 receives system information delivered from the base station 220. Examples of data formats of the CR_REQ message and the CR_RSP message are illustrated in FIGs. 7B and 7C.

After transitioning into the inactive state in step 133, the subscriber terminal 210 receives the system information output from the base station 220 every a predetermined time on the basis of the paging period information in step 135 and checks the system information in step 137. The system information includes information (e.g., a frame number (16bits), a paging area ID (PAID) (12 bits), and a paging indicator), which must be commonly received by all terminals of a base station through a broadcasting message.

Thereafter, the subscriber terminal 210 checks if a paging indicator has been set in the system information received from the base station 220 in step 137. The paging indicator is a value used to perform "paging" with respect to subscriber terminals bound into the same group in a paging area by a unit of a group. That is, that paging indicator indicates whether or not there are subscriber terminals which will perform "paging" from among subscriber terminals of a paging group expected to receive corresponding system information.

More specifically, when a plurality of subscriber terminals included within a paging area are classified into paging groups based on a predetermined reference and a paging period for receiving system information in each paging group is set, and when subscriber terminals of the predetermined paging group are expected to receive system information, the paging indicator indicates if there are subscriber terminals which will perform "paging" from among subscriber terminals of a predetermined paging group.

Herein, it is preferred that a method for classifying a plurality of subscriber terminals included within a paging area into paging groups is performed by using a MAC address assigned to each subscriber terminal. That is, it is preferred that the paging groups of subscriber terminals are classified into 256 paging groups by using the lowest 8 bits of a MAC address typically having 48 bits, and two bits of the MAC address are set in order to determine a period for paging of subscriber terminals within the paging group.

If a paging indicator is set in system information received by the subscriber terminal 210 in step 137, the subscriber terminal 210 receives a paging advertisement (PAG_ADV) message including a TMI of a subscriber terminal, which will perform "paging", from the base station 220, after a predetermined frame, in step 139. The subscriber terminal 210 having received the PAG_ADV message determines if the TMI included in the PAG_ADV is identical to a TMI of the subscriber terminal 210 in step 141. If the TMI of the PAG_ADV received in step 139 is identical to the TMI of the subscriber terminal 210, the subscriber terminal 210 changes a mode thereof to the active mode in step 113. However, if the TMI of the PAG_ADV received in step 139 is not identical to the TMI of the subscriber terminal 210, the subscriber terminal 210 maintains the inactive mode in step 133.

As indicated above, FIGs 7A to 7D illustrate message formats transmitted/received between a base station and a terminal in order to control an operation mode of the terminal in the broadband wireless access communication system according to an embodiment of the present invention. FIG. 7A illustrates an example of a response message (RNG_RSP) 310 of the base station for an RNG_REQ message of the subscriber terminal. Referring to FIG. 7A, the RNG_RSP message 310 includes a management message type (8 bits) 311, an uplink channel identifier (6 bits) 312, and TLV data 313 (variable bits) having a TMI (24 bits) of a corresponding subscriber terminal.

FIG. 7B illustrates an example of a CR_REQ message 330 used when a subscriber terminal requests connection release to a base station. Referring to FIG. 7B, the CR_REQ message 330 includes a management message type (8 bits) 331, and a basic CID (16 bits) 332 of a corresponding subscriber terminal. That is, the subscriber terminal inserts a basic CID thereof into the CR_REQ message 330 and transfers the CR_REQ message to the base station so as to request connection release.

FIG. 7C illustrates an example of a CR_RSP message 350 transferred to the subscriber terminal from the base station as a response to the CR_REQ message. Referring to FIG. 7C, the CR_RSP 350 message includes a management message type (8 bits) 351, a basic CID (16 bits) 352 of a corresponding subscriber terminal, a paging period index (2 bits) 353, and an Ack channel number (6bits) 354. The paging period index 353 has a period for reception of the subscriber terminal with respect to system information transferred from the base station when the subscriber terminal operates in the inactive mode. The Ack channel information 354 has a channel number used when the subscriber terminal having received the CR_RSP replies to the base station.

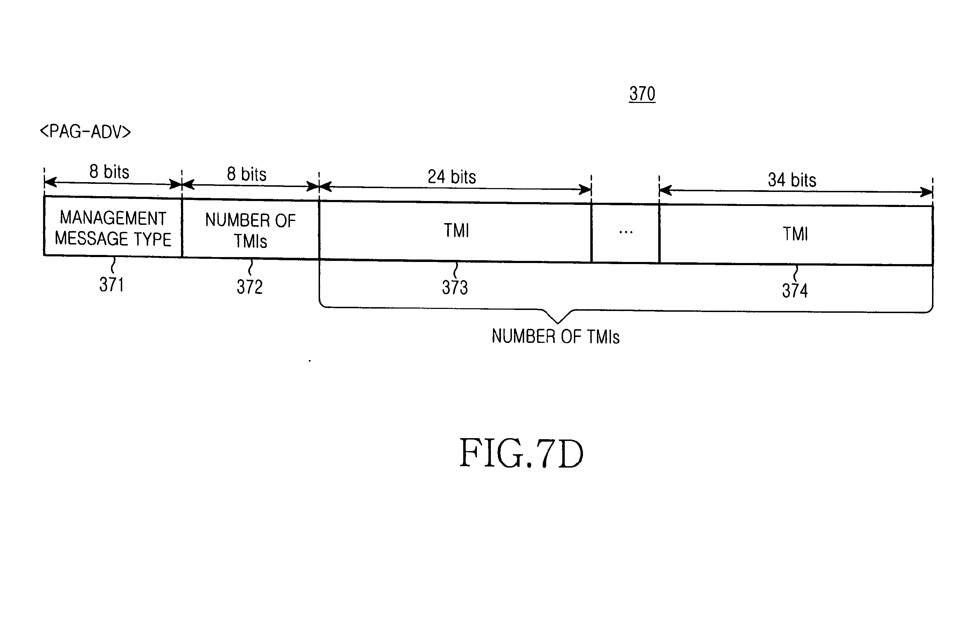

FIG. 7D illustrates an example of a paging advertisement message (PAG_ADV) 370 transferred to a subscriber terminal from a base station. Referring to FIG. 7D, the PAG_ADV message includes a management message type (8bits) 371, the number of subscriber terminals (e.g., TMI) which will perform "paging" (number of TMIs; 8bits) 372, and TMIs (24 bits) 373 and 374, which correspond to the number specified in the field 372.

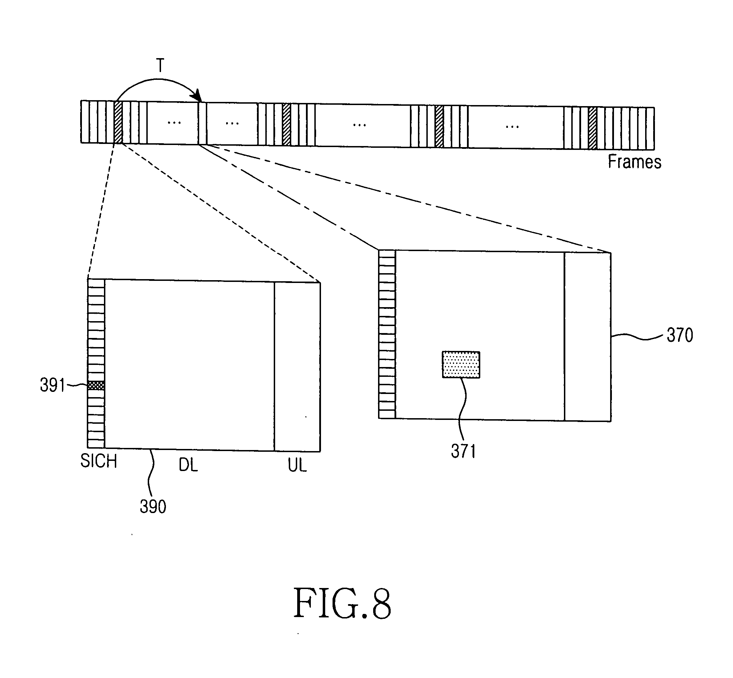

FIG. 8 illustrates a procedure of awaking a terminal in an inactive mode by controlling the terminal according to an embodiment of the present invention. In FIG. 8, parts marked with slant lines of frames represent a receiving time of a subscriber terminal for system information 390, and a letter 'T' represents information (e.g., the number of frames) about time in which a subscriber terminal must wait for receiving a PAG_ADV message, if a paging indicator 391 of a group including the subscriber terminal has been set in received system information 390.

Referring to FIG. 8, if a subscriber terminal receives system information 390 having a paging indicator 391 of a group including the subscriber terminal, after the system information 390 is received and the 'T' time lapses, the subscriber terminal receives the PAG_ADV message 370 and checks the content of the TMI information field 371 in order to determine if a TMI of the subscriber terminal is included in the PAG_ADV message 370. If the TMI of the subscriber terminal is stored in the TMI field 371, the subscriber terminal performs a state transition into the active mode.

As described above, according to the present invention, in the method for controlling operation modes of a terminal in a broadband wireless access communication system, the operation modes of the terminal are subdivided, such that it is possible to efficiently reduce power consumption of the terminal. More specifically, the present invention enables the terminal to operate in the inactive mode in which the terminal having no traffic with a base station more than a predetermined time returns a CID of the terminal to the base station and keeps only a downlink with the base station, such that it is possible to prevent power of the terminal from being consumed during the sleep mode. Also, according to the present invention, a CID is not assigned to the terminal in the inactive mode, such that it is possible to efficiently utilize resources of the base station.

While the present invention has been shown and described with reference to certain preferred embodiments thereof, it will be understood by those skilled in the art that various changes in form and details may be made therein without departing from the scope of the invention. Accordingly, the scope of the present invention should not be limited to the above-described embodiments, but should be defined by the appended claims.

## Claims

1. A method for controlling an operation mode of a subscriber terminal in a broadband wireless access communication system including a base station and subscriber terminals, the method comprising:
returning a connection identifier assigned by the base station from the subscriber terminal to the base station; and
transitioning the subscriber terminal into an inactive state in which system information periodically occurring in the base station is checked at a predetermined paging period, if there is no traffic to transmit during a predetermined time in a state in which the subscriber terminal is connected to the base station.

2. The method as claimed in claim 1, wherein inactive subscriber terminals are identified using a unique temporary mobile identifier in a paging area including areas controlled by a plurality of base stations.

3. The method as claimed in claim 2, wherein the inactive subscriber terminals are classified into predetermined groups based on the predetermined paging period, and the base station delivers the system information by adding a paging indicator to the system information in order to notify the subscriber terminals of an existence of data, if there is data to be transferred to at least one of the inactive subscriber terminals included in the predetermined group of the predetermined paging period.

4. The method as claimed in claim 3, further comprising the steps of:
receiving, by the inactive subscriber terminals, a paging advertisement message delivered after a predetermined frame, if the inactive subscriber terminals receive the system information including the paging indicator;
checking if the temporary mobile identifier of an inactive subscriber terminal is included in the paging advertisement message; and
changing the operation mode of the inactive subscriber terminal into an active state, if the temporary mobile identifier of the inactive subscriber terminal is included in the paging advertisement message.

5. The method as claimed in claim 4, wherein the step of changing the operation mode of the inactive subscriber terminal comprises the steps of:
assigning a connection identifier to the inactive subscriber terminal, by a base station controlling an area, at which the inactive subscriber terminal is positioned; and
establishing, by the inactive subscriber terminal, transmission links with the base station by using the connection identifier.

6. A method for controlling an operation mode of a subscriber terminal in a broadband wireless access communication system including a base station and subscriber terminals, the method comprising the steps of:
assigning the subscriber terminal with a unique connection identifier, which is used in an area controlled by the base station, and a unique temporary mobile identifier, which is used in a paging area including areas controlled by a plurality of base stations, as a response to a connection request from the subscriber terminal;
transitioning the subscriber terminal into an active mode, such that the subscriber terminal makes data communication with the base station while maintaining transmission links with the base station;
transitioning the subscriber terminal into a sleep mode while the subscriber terminal is maintaining transmission links by a request of the subscriber terminal;
transitioning the subscriber terminal into an inactive state in which the subscriber terminal returns the connection identifier to the base station and maintains only a down link with the base station, if the subscriber terminal has no traffic with the base station for more than a predetermined time, after entering into the sleep mode;
checking system information periodically occurring in the base station by a predetermined paging period using the temporary mobile identifier;
receiving a paging advertisement message after a predetermined frame, if the subscriber terminal in the inactive state receives the system information including a paging indicator for reporting an existence of data to be transferred to the subscriber terminal; and
transitioning the subscriber terminal into the active state, if the temporary mobile indicator of the subscriber terminal is included in the paging advertisement message.

7. The method as claimed in claim 6, wherein the step of transitioning the subscriber terminal into the active state, if the temporary mobile indicator of the subscriber terminal is included in the paging advertisement message, comprises the steps of:
assigning a connection identifier to the subscriber terminal by a base station controlling an area in which the subscriber terminal is positioned; and
establishing transmission links with the base station by using the connection identifier.

8. A controlling apparatus for controlling an operation mode of a subscriber terminal in a broadband wireless access communication system including a base station and subscriber terminals, the apparatus comprising:
means for returning a connection identifier assigned by the base station from the subscriber terminal to the base station; and
means for transitioning the subscriber terminal into an inactive state in which system information periodically occurring in the base station is checked at a predetermined paging period, if there is no traffic to transmit during a predetermined time in a state in which the subscriber terminal is connected to the base station.

9. The controlling apparatus as claimed in claim 8, adapted to operate according to one of claims 1 to 5.

10. A controlling apparatus for controlling an operation mode of a subscriber terminal in a broadband wireless access communication system including a base station and subscriber terminals, the apparatus comprising:
assigning means for assigning the subscriber terminal with a unique connection identifier, which is used in an area controlled by the base station, and a unique temporary mobile identifier, which is used in a paging area including areas controlled by a plurality of base stations, as a response to a connection request from the subscriber terminal;
means for transitioning the subscriber terminal into an active mode, such that the subscriber terminal makes data communication with the base station while maintaining transmission links with the base station;
means for transitioning the subscriber terminal into a sleep mode while the subscriber terminal is maintaining transmission links by a request of the subscriber terminal;
means for transitioning the subscriber terminal into an inactive state in which the subscriber terminal returns the connection identifier to the base station and maintains only a down link with the base station, if the subscriber terminal has no traffic with the base station for more than a predetermined time, after entering into the sleep mode;
means for checking system information periodically occurring in the base station by a predetermined paging period using the temporary mobile identifier;
means for receiving a paging advertisement message after a predetermined frame, if the subscriber terminal in the inactive state receives the system information including a paging indicator for reporting an existence of data to be transferred to the subscriber terminal; and
means for transitioning the subscriber terminal into the active state, if the temporary mobile indicator of the subscriber terminal is included in the paging advertisement message.
